# EUROPEAN PATENT SPECIFICATION

(11) **EP 4 639 265 B1**
(45) Date of publication and mention of the grant of the patent: **09.09.2026**
(21) Application number: 23848215.2
(22) Date of filing: 20.12.2023
(51) Int. Cl.: G02B 27/01, G02B 7/02

(54) **EYE STRAIN REDUCTION IN HEAD MOUNTABLE DISPLAY**
AUGENBELASTUNGSREDUKTION IN EINER KOPFMONTIERBAREN ANZEIGE
RÉDUCTION DE FATIGUE OCULAIRE DANS UNE UNITÉ D'AFFICHAGE DE TYPE VISIOCASQUE

(30) Priority: 20.12.2022 US 202263433998 P; 20.12.2022 US 202263433999 P
(43) Date of publication of application: 29.10.2025
(73) Proprietor: Meta Platforms Technologies, LLC, Menlo Park, CA 94025 (US)
(72) Inventor: JACOBS, Joel Bernard, Menlo Park, California 94025 (US); SULLIVAN, Joseph Patrick, Menlo Park, California 94025 (US); PENG, Meng, Menlo Park, California 94025 (US); STELLMAN, Jeffrey Taylor, Menlo Park, California 94025 (US); TRAN, Brandon, Menlo Park, California 94025 (US); BETHEL, Sarah, Menlo Park, California 94025 (US)
(74) Representative: Murgitroyd & Company
(86) International application number: PCT/US2023/085215
(87) International publication number: WO 2024/137856

(56) References cited:
- CN-A- 104 977 718
- CN-A- 105 425 397
- TW-U- M 619 524
- US-A1- 2020 341 283

## Description

### TECHNICAL FIELD

The present disclosure generally relates to alleviating eye strain experienced in user devices, and more particularly to reducing eye strain in a head mountable display.

### BACKGROUND

Head mountable devices include the visual displays in virtual reality(V/R) and augmented reality (A/R) environments. During use, a user can affix the head mountable device to their head to experience the VR and/or AR environment. Depending on the eye alignment of the user, depth of eye, and eye lash length, the user experience while wearing the head mountable display may become compromised and thus cause discomfort. Various mechanisms for adjusting the distance between a user's eyes and a display panel, reducing eye strain and discomfort, are known from e.g. US 2020/341283 A1, CN 104 977 718 A, TW M 619 524 U or CN 105 425 397 A.

### BRIEF SUMMARY

The subject disclosure provides for systems, devices, and methods for alleviating eye strain experienced in user devices. A user is allowed to adjust the distance between their eyes and the display panel, reducing eye strain and discomfort. For example, users with deeper set eyes relative to their forehead and/or varying eyelash length may make these adjustments to avoid and/or alleviate experiencing discomfort when trying to focus on the visual display in a head-mountable device.

One aspect of the disclosure relates to a device. The device may include a facial interface bracket, an extender bracket, and an actuating mechanism. The facial interface bracket may be configured to engage a user. The extender bracket may be coupled to a head display device and the facial interface bracket. The actuating mechanism may be coupled to at least one of the facial interface bracket and the extender bracket. The actuating mechanism may define a spatial distance between a surface of the facial interface bracket and a surface of the extender bracket.

Another aspect of the disclosure relates to a device. The device may include a facial interface bracket, an extender bracket, and an actuating mechanism. The facial interface bracket may be configured to engage a user. The extender bracket may be coupled to a head display device and the facial interface bracket. The actuating mechanism may be coupled to at least one of the facial interface bracket and the extender bracket. The actuating mechanism may define a spatial distance between a surface of the facial interface bracket and a surface of the extender bracket. The actuating mechanism may include a plug-and-groove interface, a slider, and a cantilever. The cantilever may be actuated by pressing a button. The cantilever may flex along a portion coupled to the surface of the extender bracket when the button is pressed.

Yet another aspect of the disclosure relates to a method for manufacturing a device. The method may include providing a facial interface bracket configured to engage a user. The method may include coupling an extender bracket to a head display device and the facial interface bracket. The method may include coupling an actuating mechanism to at least one of the facial interface bracket and the extender bracket. The actuating mechanism may define a spatial distance between a surface of the facial interface bracket and a surface of the extender bracket. The method may include adjusting the actuating mechanism to set the desired distance between the facial interface bracket and the extender bracket. The method may include securing the actuating mechanism to maintain the set distance between the facial interface bracket and the extender bracket.

Still another aspect of the disclosure relates to a system for manufacturing a device. The system may include means for providing a facial interface bracket configured to engage a user. The system may include means for coupling an extender bracket to a head display device and the facial interface bracket. The system may include means for coupling an actuating mechanism to at least one of the facial interface bracket and the extender bracket. The actuating mechanism may define a spatial distance between a surface of the facial interface bracket and a surface of the extender bracket. The system may include means for adjusting the actuating mechanism to set the desired distance between the facial interface bracket and the extender bracket. The system may include means for securing the actuating mechanism to maintain the set distance between the facial interface bracket and the extender bracket.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIGs. 1A and 1B illustrate an example head-mountable display system, in accordance with aspects of the disclosure.
FIGS. 2A, 2B, and 2C illustrate a system configured to provide eye strain relief with a head mountable display device, in accordance with one or more implementations.
FIGS. 3A and 3B illustrate a system configured to provide eye strain relief with a head mountable display device, in accordance with one or more implementations.
FIGS. 4A, 4B and 4C illustrate a system configured to provide eye strain relief with a head mountable display device, in accordance with one or more implementations.
FIGS. 5A, 5B, and 5C illustrate a system configured to provide eye strain relief with a head mountable display device, in accordance with one or more implementations.
FIGS. 6A and 6B illustrates the system of FIGS. 5A, 5B, and 5C, in accordance with one or more implementations.
FIGS. 7A, 7B, 7C, 7D, 7E, and 7F illustrate a system configured to provide eye strain relief with a head mountable display device, in accordance with one or more implementations.
FIGS. 8A, 8B, 8C, and 8D illustrate a system configured to provide eye strain relief with a head mountable display device, in accordance with one or more implementations.
FIGS. 9A and 9B illustrate a system configured to provide eye strain relief with a head mountable display device. in accordance with one or more implementations.
FIGS. 10A, 10B, and 10C illustrates a system configured to provide eye strain relief with a head mountable display device.
FIG. 11 illustrates an example flow diagram for manufacturing an eye strain relief device with coupling to head mountable display device, according to certain aspects of the disclosure.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure. The invention is defined in the independent claims. Further aspects are defined in the dependent claims.

Current solutions do not effectively reduce eye strain and discomfort caused by the user's eye alignment and focusing challenges. There is a need for an improved system that can alleviate eye strain and provide a more comfortable user experience while wearing a head mountable display.

The subject disclosure provides for systems, devices, and methods for alleviating eye strain experienced in user devices. A user is allowed to adjust the distance between their eyes and the display panel, reducing eye strain and discomfort. For example, users with deeper set eyes relative to their forehead or varying eyelash length may make these adjustments to avoid and/or alleviate experiencing discomfort when trying to focus on the visual display in a head-mountable device.

Implementations described herein address the aforementioned shortcomings and other shortcomings by providing a system for eye strain reduction in head mountable displays. The system includes an adjustable facial interface bracket and an extender bracket that can be coupled to the head mountable display device. An actuating mechanism is incorporated to define the spatial distance between the facial interface bracket and the extender bracket. This allows users to customize the distance between their eyes and the display panel, reducing eye strain and improving the overall comfort of the head mountable display. The system offers a flexible and user-friendly solution to enhance the user experience and alleviate eye strain in head mountable displays.

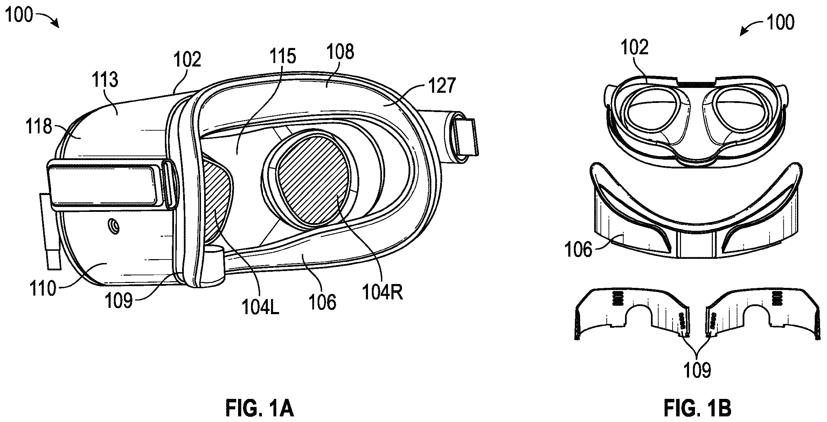

FIG. 1A and 1B illustrates an example head-mountable display system 100, in accordance with aspects of the disclosure. FIG. 1A illustrates a rear isometric view of the head mountable display device 100 while FIG. 1B illustrates a front expanded view of the head mountable display device. As shown in FIG. 1, a head-mountable-display system 100 may include a head-mountable display device 102 and a facial-interface system 108, a strap assembly (not shown), and audio subsystems (not shown). A head-mountable display device may include any type or form of display device or system that is worn on or about a user's head and displays visual content to the user. Head-mountable display devices may display the visual content in any suitable manner, including via a display panel (e.g., an LCD or LED display panel), a projector, a cathode ray tube, an optical mixer, etc. Head-mountable display devices may display content in one or more of various media formats. For example, a head-mountable display device may display video, photos, and/or computer-generated imagery (CGI).

In the example of FIG. 1, head-mountable display device 102 includes a display housing 110 within, and/or to, which various components of head-mountable display device 102 can be mounted, including lenses 104 and/or various electronic components, including display components as described herein. Display housing 110 may include a housing back surface (not shown) and peripheral surfaces 113 substantially surrounding one or more internal components, and an opening 115 surrounding a viewing region 106 at a front side of display housing 110.

Head-mountable display devices such as head-mountable display device 102 may provide diverse and distinctive user experiences. Some head-mountable display devices may provide virtual-reality (VR) experiences (i.e., they may display computer-generated or pre-recorded content to a user and block out the user's view of their real-world surroundings), while other head- mountable displays may provide real-world experiences (i.e., they may display live imagery from the physical world). Head-mountable displays may also provide any mixture of live and virtual content. For example, virtual content may be projected onto a view of physical world (e.g., via optical or video see-through), which may result in augmented reality (AR) or mixed reality (MR) experiences for the user. Head-mountable display devices such as head-mountable display device 102 may be configured to be mounted to a user's head in a number of ways. Some head- mountable display devices may be incorporated into glasses or visors. Other head-mountable display devices may be incorporated into helmets, hats, or other headwear.

Head-mountable display device 102 may include or be implemented in conjunction with an artificial reality system. Artificial reality refers to a user experience of audio, visual, tactile, and/or other sensory output of a device, the output having been created by the device or adjusted by the device relative to the real world before presentation to a user. Artificial reality can refer to, e.g., a virtual reality (VR), an augmented reality (AR), a mixed reality (MR), a hybrid reality, or some combination and/or derivative thereof. Artificial reality content may include content that is entirely virtual device-generated and/or system-generated content, and/or can include virtual content that is combined with real-world content that is directly viewable by the user (e.g., through a transparent or semitransparent portion of the device) or that is captured by one or more system cameras and displayed to the user by the device.

The artificial reality content may include video, audio, haptic feedback, or some combination thereof, and any of which may be presented in a single channel or in multiple channels (such as stereo video that produces a three-dimensional visual effect to the viewer). Additionally, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mountable display (sometimes referred to as a head-mounted display (HMD) without intending to require that the HMD is currently being worn on a user's head) connected to a host computer system, a standalone HMD, a mobile device or computing system, or any other hardware platform capable of providing artificial reality content to one or more viewers.

Facial-interface system 108 may be configured to comfortably rest against a region of the user's face, including a region surrounding the user's eyes, when head-mountable-display system 100 is worn by the user. For example, facial-interface system 108 may include an interface cushion 127 that is configured to rest against portions of the user's face (e.g., at least a portion of the user's nasal, cheek, temple, and/or forehead facial regions). Facial-interface system 108 extends around viewing region 106 and can be arranged to allow a user wearing head-mountable display device 102 to look through lenses 104 of head-mountable display device 102 without interference from outside light.

The head-mountable display device 102 may include a display panel 118 disposed within display housing 110. Display panel 118 may be implemented as a liquid crystal display (LCD) panel, a light-emitting diode (LED) display panel or a display panel implementing other display pixel technologies.

As shown in FIG. 1A, display panel 118 may be disposed within display housing 110 so as to overlap left-eye lens(es) 104L and right-eye lens(es) 104R, such that images produced by corresponding regions of display panel 118 are visible to a user through left-eye lens(es) 104L and right-eye lens(es) 104R. For example, distinct portions of display panel 118 may be visible to each of the user's eyes, with the distinct portions of the display panel being separated by a dividing region (e.g., portions of separate eye cups for each lens, a central dividing partition, etc.) extending between display panel 118 and a mounting structure for left-eye lens(es) 104L and right-eye lens(es) 104R. Such a configuration may enable distinct images to be presented, by display panel 118, to each of the user's eyes, allowing for three-dimensional content to be perceived by the user. While a single contiguous display panel 118 (a contiguous panel having a display region for each eye of the user) is illustrated in FIG. 1A, it should be appreciated that head-mountable display device 102 may be provided with multiple display panels (e.g., one display panels such as one LCD display panel for each eye of the user).

As shown in FIG. 1B, the system 100 can comprise an eye relief device comprising a facial interface bracket 106 and an extender bracket 109. The orientation of the coupling between the interface bracket 106 and the extender bracket 109 can be adjusted to increase or decrease the distance between a user's eyes and the display panel 118. The extender bracket can comprise a multiple pieces as shown in FIG 1B or a single (unitary) piece. The interface bracket and extender bracket can comprise materials including but not limited to: metals, polymers, plastic, and where the materials are structured with rigidity to maintain a locked position with the coupling between the interface bracket and extender bracket is set. In a further aspect, the materials comprise an elastic modulus that permits the materials to flex, and/or deform with a form is placed on the system component and then return to an initial structure when the force is removed from the system component.

Display housing 110 may be formed from a rigid material, such as a rigid plastic, that supports and protects internal components housed therein, such as display panel 118 and other electronics. At least a portion of display housing 110, such as a portion of display housing 110 surrounding viewing region 106, may include a light-absorbing material that prevents passage of external light and prevents reflection of light incidentally entering viewing region 106. Blocking external light and/or preventing reflection of light in viewing region 106 of head-mountable display device 102 may greatly enhance a user's immersive viewing experience by ensuring that nearly all light visible to the user is emitted from display panel 118. The head-mountable display device 102 may be provided with a connecting cable (not shown) that communicatively couples the head-mountable display device 102 to a remote system such as a remote computing device (e.g., a desktop computer, a tablet, a game console, a server, a dedicated computer, or the like) that generates content to be displayed by display panel 118. However, it should also be appreciated that head-mountable display device 102 may be wirelessly coupled to a remote computing device.

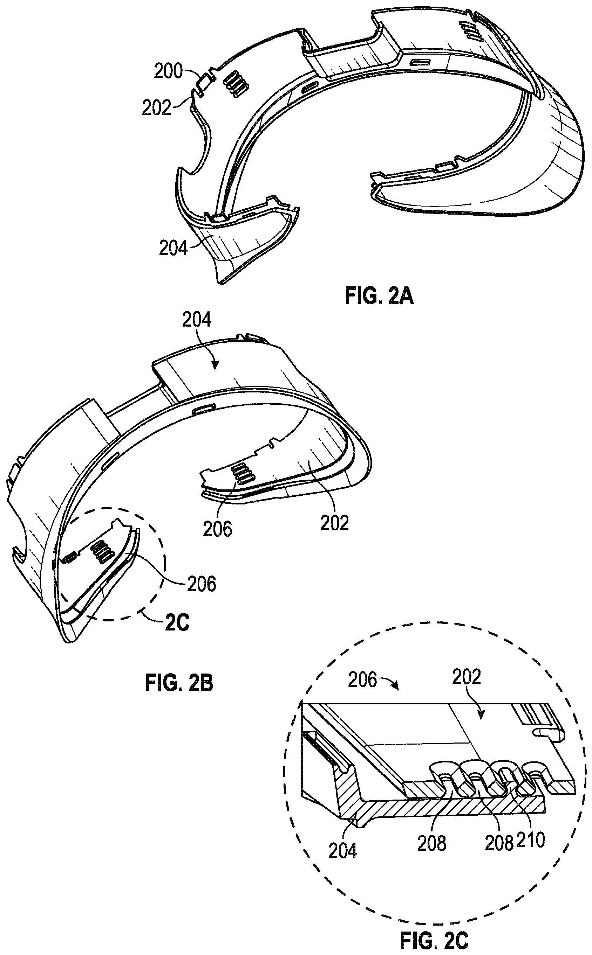

FIGS. 2A, 2B, and 2C illustrate a system 200 configured to provide eye strain relief with a head mountable display device, in accordance with one or more implementations. The system 200 may include a facial interface bracket 204 and extender (ER) bracket 202. The facial interface (FI) bracket 204 and the extender bracket 202 may be oriented such that the facial interface bracket 204 and the extender bracket 202 can move parallel to each other. For example, in a commercial implementation, when the extender bracket 202 is fixed and coupled to the housing 102, the facial interface bracket 204 may move forward towards the display panel and aft away for the display panel. The facial interface bracket 204 and the extender bracket 202 may be coupled to each other wherein the distance between surfaces on the extender bracket 204 and facial interface bracket 204 is defined by an actuating mechanism 206. In system 200, the actuating mechanism 206 may include an arrangement of fasteners that permits the facial interface bracket 204 and extender bracket to move relative each other. Once a desired distance between the facial interface bracket 204 and housing 102 is achieved, the fasteners of the actuating mechanism 206 may be engaged to hold the desired distance between the facial interface bracket and the extender bracket in a fixed position. As depicted in the magnified cut-away view of FIGS. 2A, 2B, and/or 2C, the actuating mechanism 206 may include a plug-and-groove interface. In particular, external surface of the facial interface bracket 204 can comprise a protrusion (or plug) 210 that extends normally from the surface of the facial interface bracket. The extender bracket 202 may include a plurality of grooves 208 defined in the external surface of the extender bracket. As the user determines the distance between the facial interface bracket 204 and extender bracket 202, the grooves 208 may be engaged by the protrusion 210. In some implementations, the system 200 may include multiple actuating mechanisms to maintain symmetry in the system. The grooves 208 may be defined in the surface of the facial interface bracket 204 and protrusion 210.

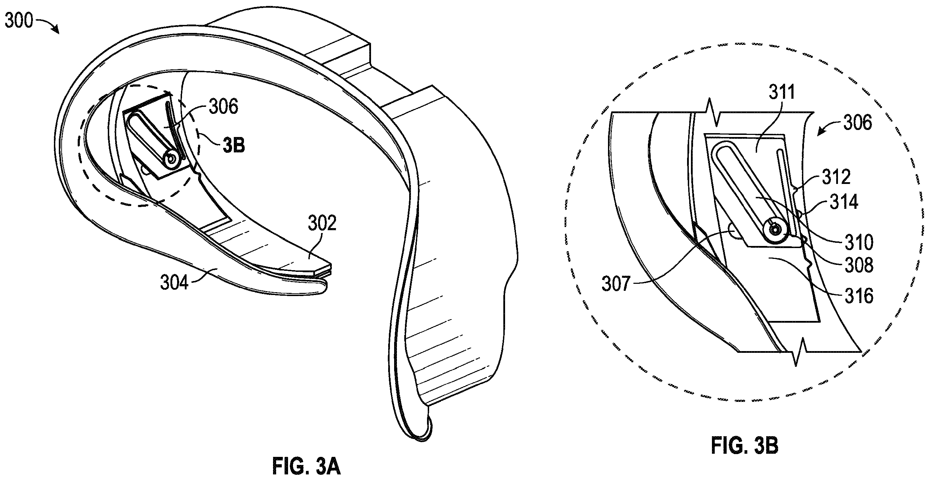

FIGS. 3A and 3B illustrate a system 300 configured to provide eye strain relief with a head mountable display device, in accordance with one or more implementations. The system 300 may include a facial interface bracket 304 and extender bracket 302. The facial interface bracket 304 and extender bracket 302 may be configured to slide past each other. The system 300 may include an actuating mechanism 306. The extender bracket 302 may include a locking insert 311 having an angled groove 310. The angled groove 310 may be configured to engage the retaining pin 308. The locking insert 311 may include a locking nodule 312. The locking nodule 312 may include a protrusion that extends from a surface of the locking insert 311. The locking insert 311 may engage a mating groove 314. The interface between the locking nodule 312 and mating groove 314 may lock the positional distance between the facial interface bracket 304 and extender bracket 302. The actuating extending mechanism 306 of system 300 may include a slider 308. The slider 308 may include a protrusion extending from a surface of the facial interface 304. The slider 308 may include a retaining pin that is affixed to the facial interface bracket 304. When the user manipulates the locking insert up and down, the extender bracket 302 may move forward and aft. Further, motion of the extender bracket 302 may be defined by an engagement of the retaining pin in the angled groove 310 of the locking insert.

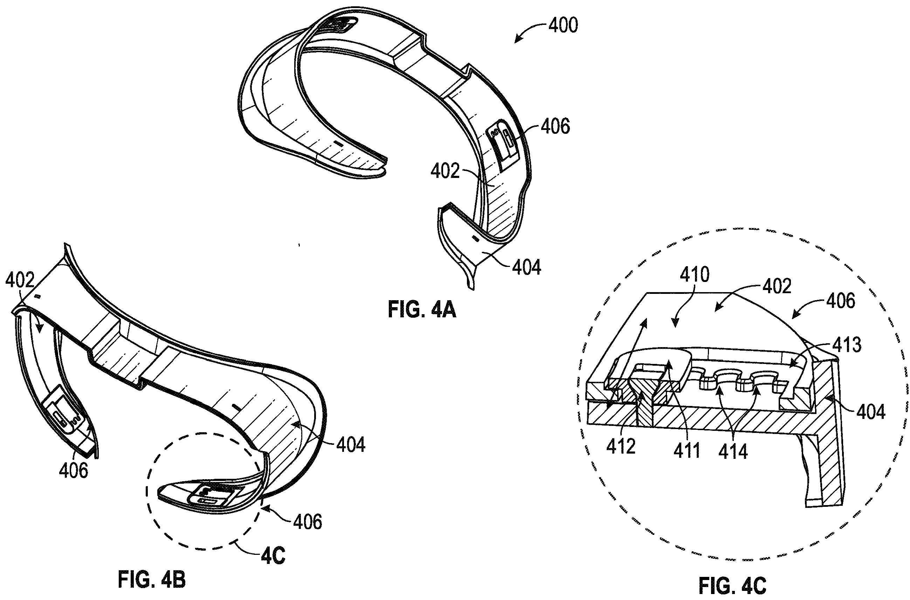

FIGS. 4A, 4B and 4C illustrate a system 400 configured to provide eye strain relief with a head mountable display device, in accordance with one or more implementations. The system 400 may include a facial interface bracket 404 and extender bracket 402. The facial interface bracket 404 and extender bracket 402 may be configured to slide past each other. The actuating mechanism 406 between the facial interface bracket 304 and the extender bracket 402 may include a tab device 410. The tab device 410 may include two components. The first component may include a tab 411. The tab 411 may be oriented to translates in the channel 413. The sliding tab 411 may be held in channel by a pin 412. The pin 412 may anchor the tab 410 to the facial interface bracket. The pin 412 may be an extrusion from the surface of the interface bracket, to similarly function as an anchor for the sliding tab 411. After the user has defined the relative distance between the facial interface bracket 404 and the extender bracket 402, the user may lock the desired position in place by pushing the tab along an axis to engage a portion of one of the grooves 414. A portion of the tab 411 may be configured to engage the grooves 414 defined by the external surface of the extender bracket 302. The user may disengage the lock done by the tab device by sliding the tab 411 away from the grooves 414.

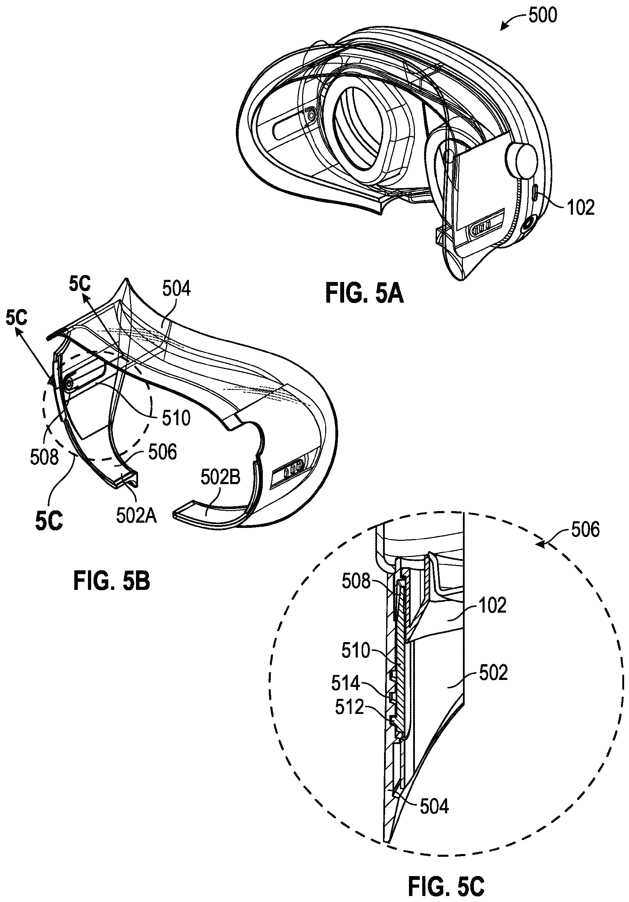

FIGS. 5A, 5B, and 5C illustrate a system 500 configured to provide eye strain relief with a head mountable display device, in accordance with one or more implementations. The system 500 may include a facial interface bracket 504 and extender bracket 502. The facial interface bracket 504 and the extender bracket 502 may be configured to slide along each other to extend or constrict the distance between the users face and the display panel similar to the previous implementations. The actuating mechanism 506 may include a cantilever 510 that is actuated by pressing a button 508. On an external surface of the extender bracket 502, a cantilever 510 may be defined in the surface of the bracket by defining a channel that circumscribes the cantilever 510. The user may cause flexion in the cantilever 510 by pressing a button 508. The button 508 may include one end of the cantilever 510. Pressing the button 508 may cause the cantilever to flex along the portion of the cantilever coupled to the surface of the extender bracket 502. As the cantilever flexes, the free end of the cantilever, which may include a protrusion 512, may disengage from a groove 514 defined by the external surface of the facial interface bracket 504. The facial interface bracket 504 may include a plurality both channeled grooves 514 that are configured to provide a resting point for the actuating mechanism. The actuating mechanism may be oriented to be obstructed by a portion of housing 102 when the housing 102, facial interface 504, and extender bracket 502 are coupled. This orientation configuration may reduce the likelihood of unintentional actuation of the coupling device.

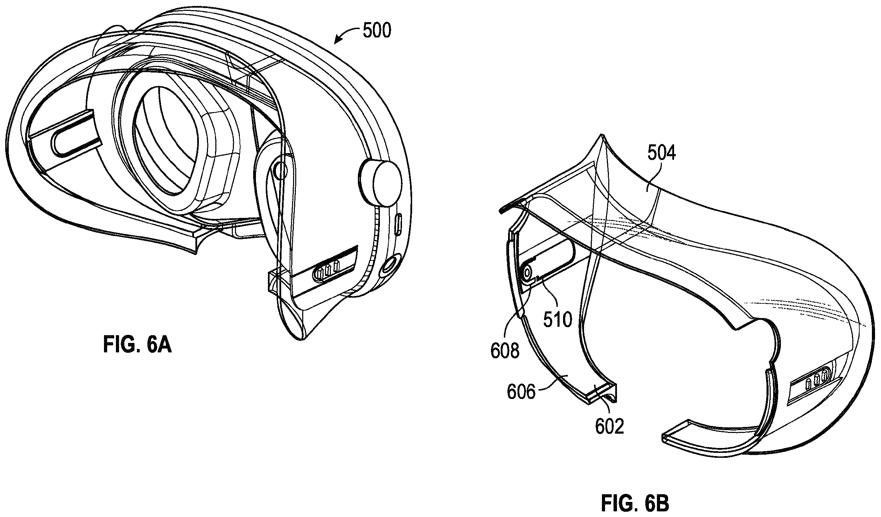

FIGS. 6A and 6B illustrates the system 500 of FIGS. 5A, 5B, and 5C, in accordance with one or more implementations. In some implementations, the system 500 may include a configuration wherein the extender bracket 602 may include two portions 606 and 608, as depicted in FIG. 6, instead of a unitary piece as depicted in FIG. 5.

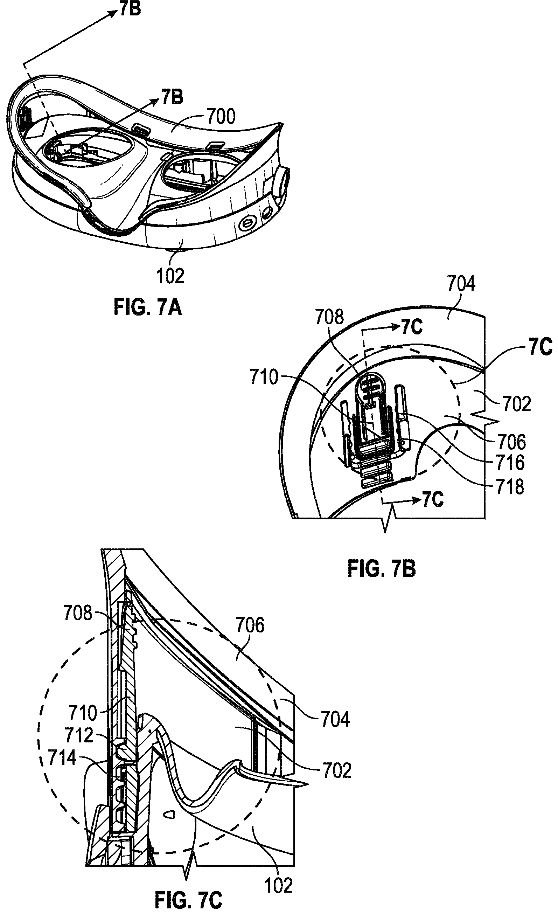

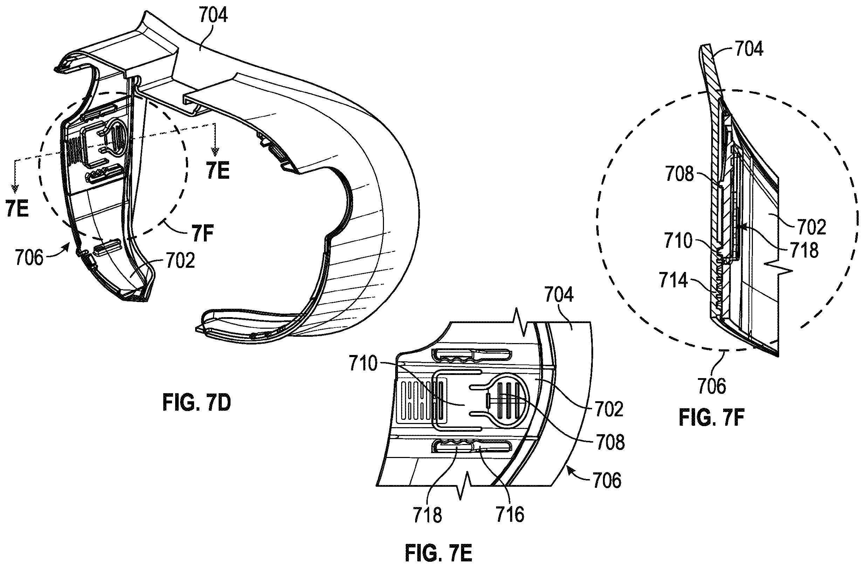

FIGS. 7A, 7B, 7C, 7D, 7E, and 7F illustrate a system 700 configured to provide eye strain relief with a head mountable display device, in accordance with one or more implementations. The system 700 may include a facial interface bracket 704 and extender bracket 702. The facial interface bracket 704 and the extender bracket 702 may be configured to slide along each other to extend or constrict the distance between the users face and the display panel similar to the previous implementations. The actuating mechanism 706 may include a flexing cantilever 710 that is actuated by pressing a button 708. On an external surface of the extender bracket 702, a cantilever may be defined in the surface of the bracket by defining a channel that circumscribes the bracket. The user may cause flexion in the cantilever by pressing a button 708. The button may include one end of the cantilever. Pressing the button may cause the cantilever 710 to flex along the portion of the cantilever 710 coupled to the surface of the extender bracket 702. As the cantilever 710 flexes, the free end of the cantilever 710, which may include a protrusion 712, may disengage from a groove 714 defined by the external surface of the facial interface bracket 704. The facial interface bracket 704 may include a plurality both channeled grooves 714 that are configured to provide a resting point for the actuating mechanism 706. In some implementations, the actuating mechanism 706 may include an alignment fixture 718. The alignment fixture may include a protrusion 718 that extends from a surface of the facial interface bracket 704. The protrusion 718 may extend through an alignment channel 716 defined in a surface of the extender bracket 702. The actuating mechanism 706 may be oriented to be obstructed by a portion of the housing 102 when the display pane is adjacent to the facial interface 704, and extender bracket 702 are coupled. This orientation configuration can reduce the likelihood of unintentional actuation of the coupling device 706.

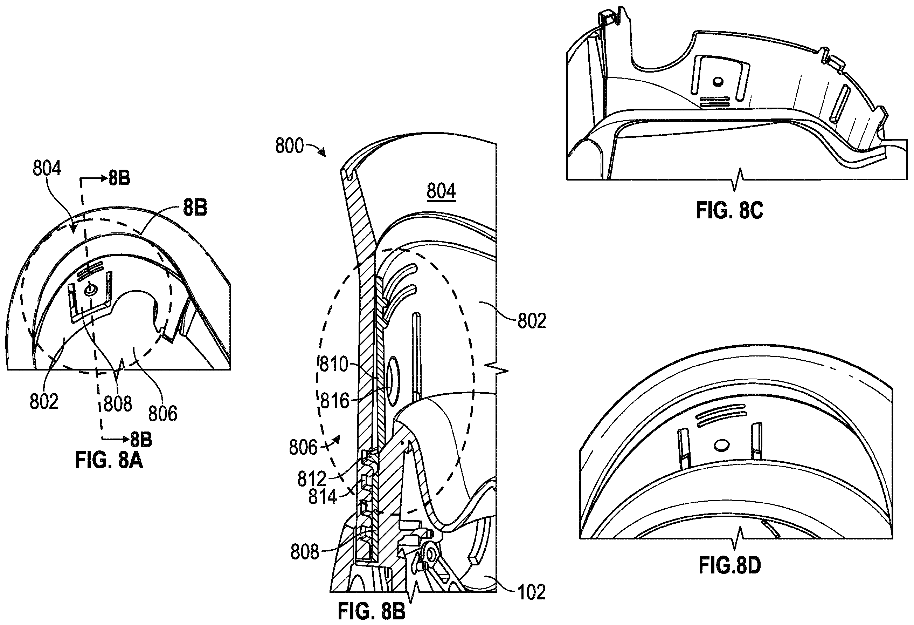

FIGS. 8A, 8B, 8C, and 8D illustrate a system 800 configured to provide eye strain relief with a head mountable display device, in accordance with the claimed invention. The system 800 includes a facial interface bracket 804 and extender bracket 802. The facial interface bracket 804 and the extender bracket 802 may be configured to slide along each other to extend or constrict the distance between the users face and the display panel similar to the previous implementations. The actuating mechanism 806 may include a flexing cantilever 810 that is actuated by pressing a distal portion of the cantilever 808. On an external surface of the extender bracket 802, a cantilever 810 may be defined in the surface of the bracket by defining a channel that circumscribes the bracket. As the cantilever flexes, the free end of the cantilever, which may include a protrusion 812, may disengage from a groove 814 defined by the external surface of the facial interface bracket 804. The facial interface bracket 804 may include a plurality both channeled grooves. The extender bracket 802 defines an orifice 816, that allows the user to see numbers placed on the external surface of the facial interface bracket. When the user extends the actuating mechanism 806, the movement to each successive groove 814 may show a different numerical indicator that is associated with the relative distance between the extender bracket 802 and facial interface bracket 804. The actuating mechanism 806 may be oriented to be obstructed by a portion of the housing 102 when the display panel, facial interface 804, and extender bracket 802 are coupled. This orientation configuration may reduce the likelihood of unintentional actuation of the coupling device.

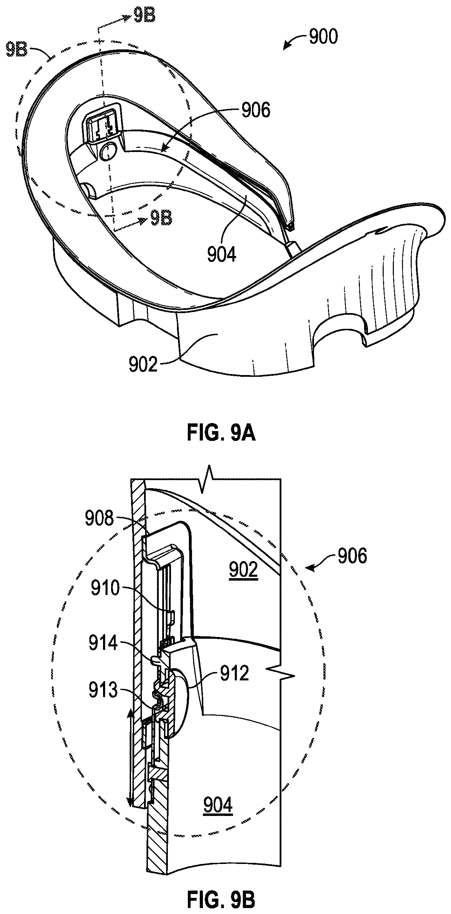

FIGS. 9A and 9B illustrate a system 900 configured to provide eye strain relief with a head mountable display device, in accordance with one or more implementations. The system 900 may include a facial interface bracket 904 and extender bracket 902. The facial interface bracket 904 and the extender bracket 902 may be configured to slide along each other to extend or constrict the distance between the users face and the display panel similar to the previous implementations. The actuating mechanism 906 may include a biased latch 914 activated by a button 912. The internal surface of the facial interface bracket 904 may include a latch housing 908 that extends from the surface. A surface of the latch housing 908 may define a plurality of grooves 910. The latch 914 may come to rest in the successive grooves 910 to lock the distance between the facial interface bracket 904 and extender bracket 902. The spring latch 914 may be activated when a button 912 coupled to a surface of the extender bracket 902 is pressed. The button 912 may be biased such that its resting (unactuated position) locks the biased spring latch 914 in place. Once the button 912 is pressed, prongs 913 extending from the button may transfer a force to the spring latch 914, causing the spring latch 914 to flex and disengage from the grooves 910 in the latch housing 908.

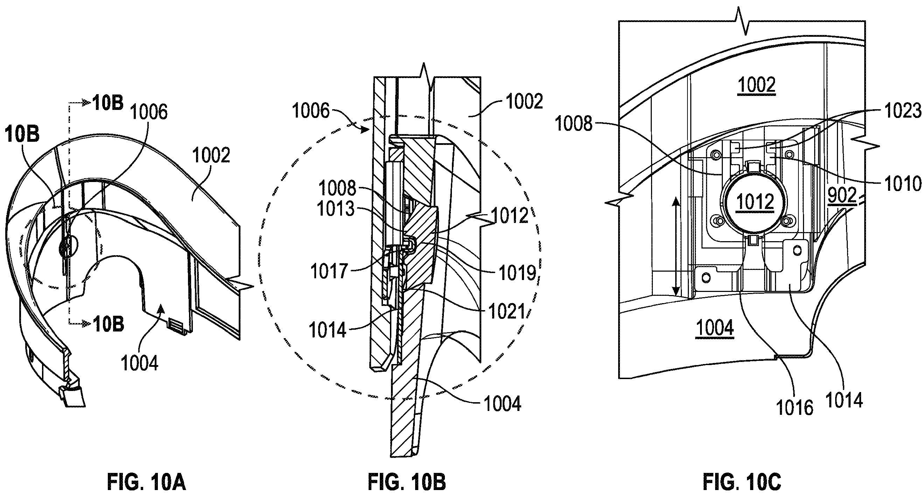

FIGS. 10A, 10B, and 10C illustrate a system 1000 configured to provide eye strain relief with a head mountable display device, in accordance with one or more implementations. The system 1000 may include a facial interface bracket 1004 and extender bracket 1002. The facial interface bracket 1004 and the extender bracket 1002 may be configured to slide along each other to extend or constrict the distance between the users face and the display panel similar to the previous implementations. The actuating mechanism 1006 may include a biased latch 1014 activated by a button 1012. The spring latch 1014 may include a cantilevered member with a free end 1017 and anchored end 1016. The anchored end may be coupled to the extender bracket 1002 The internal surface of the facial interface bracket 1004 may include a latch housing 1008 that extends from the surface. A surface of the latch housing 1008 may include an arrangement of a plurality of ridges (teeth) 1023 that define a plurality of grooves 1010. The prongs 1013 on the opposing surface of the button may come to rest in the successive grooves 1010 to lock the distance between the facial interface bracket 1004 and extender bracket 1002. In some implementations, the engagement juncture 1021 between the interface bracket 1004 and the button 1012, the cross-sectional surfaces between the button and interface bracket may be angled. When disengaging the lock status, pressing the button 1012 may slide button past a surface of the interface bracket 1004 at the engagement juncture 1021. When the force acting on the button is removed, the biased spring latch 1014 may press on the button 1012, where the motion of the button will cease when angled surfaces of the button an interface bracket can no longer slide past each other at the engagement juncture 1021. The button 1012 may be biased such that its resting (unactuated position) locks the biased the free end 1017 of the spring latch 1014 in place. The spring latch 1014 may be activated when a button 1012 is pressed. The spring latch at the free end 1017 may be engaged in a channel 1019 defined by an opposing surface of the button 1012. Once the button 1012 is pressed, prongs 1013 extending from the button may transfer a force to the spring latch 1014, causing the spring latch 1014 to flex and disengage the prongs 1013 from the grooves 1010 in the latch housing 1008. When the mechanism 1006 slides up and down, the free end 1017 of spring latch 1014 may bump/detent the teeth 1023 of the housing 1008. The operation of the mechanism sliding up and down to traverse between a locked and unlocked position may yield both audible and haptic feedback as the brackets pass through each position.

The disclosed system(s), device(s), and/or method(s) address a problem in traditional device-eye-strain reduction techniques, namely, the technical problem of reducing eye strain in a head mountable display. For example, the disclosed system(s), device(s), and/or method(s) solve this technical problem by providing a solution that includes an adjustable facial interface bracket and extender bracket, along with an actuating mechanism, to allow users to customize the distance between their eyes and the display panel.

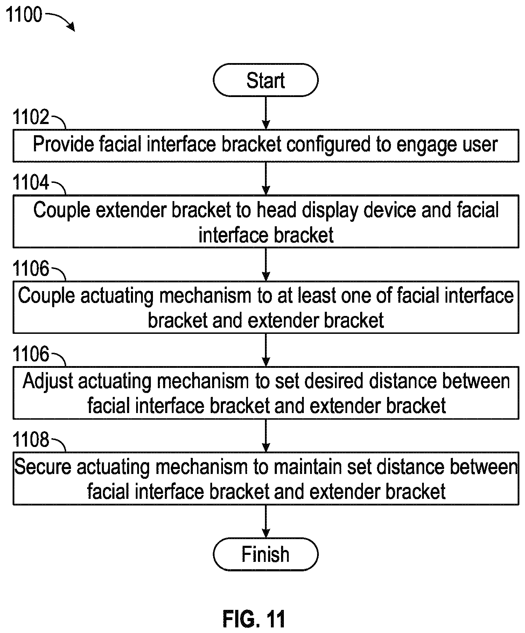

FIG. 11 illustrates an example flow diagram (e.g., process 1100) for manufacturing an eye strain relief device with coupling to head mountable display device, according to the claimed invention. For explanatory purposes, the example process 1100 is described herein with reference to FIGS. 1-10. Further for explanatory purposes, the steps of the example process 1100 are described herein as occurring in serial, or linearly. However, multiple instances of the example process 1100 may occur in parallel. For purposes of explanation of the subject technology, the process 1100 will be discussed in reference to FIGS. 1-10.

Step 1102 includes providing a facial interface bracket configured to engage a user. Step 1104 includes coupling an extender bracket to a head display device and the facial interface bracket. Step 1106 includes coupling an actuating mechanism to at least one of the facial interface bracket and the extender bracket. The actuating mechanism defines a spatial distance between a surface of the facial interface bracket and a surface of the extender bracket. Step 1108 includes adjusting the actuating mechanism to set the desired distance between the facial interface bracket and the extender bracket. Step 1110 includes securing the actuating mechanism to maintain the set distance between the facial interface bracket and the extender bracket.

For example, as described above in relation to FIGS. 1-10, step 1102 may include providing a facial interface bracket (e.g., facial interface bracket 106, 204, 304, 404, 504, 604, 704, 804, 904, and/or 1004) configured to engage a user. Step 1104 may include coupling an extender bracket (e.g., extender bracket 109, 202, 302, 402, 502, 702, 802, 902, and/or 1002) to a head display device (e.g., the head display device 102) and the facial interface bracket. Step 1106 may include coupling an actuating mechanism (e.g., actuating mechanism 206, 306, 406, 506, 706, 806, 906, and/or 1006) to at least one of the facial interface bracket and the extender bracket. The actuating mechanism may define a spatial distance between a surface of the facial interface bracket and a surface of the extender bracket. Step 1108 may include adjusting the actuating mechanism to set the desired distance between the facial interface bracket and the extender bracket. Step 1110 may include securing the actuating mechanism to maintain the set distance between the facial interface bracket and the extender bracket.

According to an aspect, the actuating mechanism comprises a plug-and-groove interface (e.g., grooves 208, 310, 314, 414, 514, 714, 814, 910, and/or 1010).

According to an aspect, the actuating mechanism comprises a slider (e.g., slider 308).

According to an aspect, the actuating mechanism comprises a cantilever (e.g., cantilever 510, 710, and/or 810).

According to an aspect, the process 1100 may include providing a locking insert (e.g., locking insert 311) on the extender bracket.

According to the claimed invention, the process 1100 includes providing an orifice (e.g., orifice 816) on the extender bracket for displaying numerical indicators.

As used herein, the phrase "at least one of" preceding a series of items, with the terms "and" or "or" to separate any of the items, modifies the list as a whole, rather than each member of the list (i.e., each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the terms "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination.

The subject matter of this specification has been described in terms of particular aspects, but other aspects can be implemented within the scope of the following claims. For example, while operations are depicted in the drawings in a particular order, this should not be understood as requiring that such operations be performed in the particular order shown or in sequential order, or that all illustrated operations be performed to achieve desirable results. The actions recited in the claims can be performed in a different order and still achieve desirable results. As one example, the processes depicted in the accompanying figures do not necessarily require the particular order shown, or sequential order, to achieve desirable results. **In** certain circumstances, multitasking and parallel processing may be advantageous. Moreover, the separation of various system components in the aspects described above should not be understood as requiring such separation in all aspects. Other variations are within the scope of the following claims.

## Claims

1. A device comprising:
a facial interface bracket (804) configured to engage a user;
an extender bracket (802) coupled to a head display device (102) and the facial interface bracket (804); and
an actuating mechanism (806) coupled to at least one of the facial interface bracket (804) and the extender bracket (802), where in the actuating mechanism (806) define a spatial distance between a surface of the facial interface bracket (804) and a surface of the extender bracket (802);
**characterized in that**:
the facial interface bracket (804) comprises numerical indicators on an exterior surface thereof; and
the extender bracket (802) comprises an orifice (816) for displaying the numerical indicators.

2. The device of claim 1, wherein the actuating mechanism comprises a plug-and-groove interface.

3. The device of claim 1, wherein the actuating mechanism comprises a slider.

4. The device of claim 1, wherein the actuating mechanism comprises a cantilever.

5. The device of claim 1, wherein the actuating mechanism comprises a biased latch.

6. The device of claim 1, further comprising a locking insert on the extender bracket.

7. The device of claim 1, further comprising a button for actuating the actuating mechanism.

8. The device of claim 1, wherein the actuating mechanism comprises one or both of an elastic material or a flexible material.

9. The device of claim 1, further comprising an alignment fixture on the facial interface bracket.

10. The device of claim 1, further comprising a latch housing on the facial interface bracket.

11. The device of claim 1, further comprising a biased spring latch on the extender bracket.

12. The device of claim 1, further comprising a plurality of grooves on the facial interface bracket.

13. The device of claim 1, further comprising a plurality of grooves on the extender bracket.

14. A method for manufacturing a device, the method comprising:
providing a facial interface bracket (804) configured to engage a user;
coupling an extender bracket (802) to a head display device (102) and the facial interface bracket (804);
coupling an actuating mechanism (806) to at least one of the facial interface bracket (804) and the extender bracket (802), wherein the actuating mechanism (806) defines a spatial distance between a surface of the facial interface bracket (804) and a surface of the extender bracket (802);
adjusting the actuating mechanism (806) to set the desired distance between the facial interface bracket (804) and the extender bracket (802); and
securing the actuating mechanism (806) to maintain the set distance between the facial interface bracket (804) and the extender bracket (802);
**characterized in that** the method further comprises:
providing numerical indicators on an exterior surface of the facial interface bracket (804); and
providing an orifice (816) on the extender bracket (802) for displaying the numerical indicators.

15. The method of claim 14, wherein the actuating mechanism comprises a plug-and-groove interface.

## Patentansprüche

1. Eine Vorrichtung, die Folgendes beinhaltet:
eine Gesichtsschnittstellenhalterung (804) die konfiguriert ist, um einen Benutzer in Eingriff zu nehmen;
eine Verlängerungshalterung (802), die mit einer Kopfanzeigevorrichtung (102) und der Gesichtsschnittstellenhalterung (804) gekoppelt ist; und
einen Betätigungsmechanismus (806), der mit mindestens einer von der Gesichtsschnittstellenhalterung (804) und der Verlängerungshalterung (802) gekoppelt ist, wobei der Betätigungsmechanismus (806) einen räumlichen Abstand zwischen einer Oberfläche der Gesichtsschnittstellenhalterung (804) und einer Oberfläche der Verlängerungshalterung (802) definiert;
**dadurch gekennzeichnet, dass**:
die Gesichtsschnittstellenhalterung (804) numerische Indikatoren auf einer Außenfläche davon beinhaltet; und
die Verlängerungshalterung (802) eine Öffnung (816) zum Anzeigen der numerischen Indikatoren beinhaltet.

2. Vorrichtung gemäß Anspruch 1, wobei der Betätigungsmechanismus eine Stecker-und-Nut-Schnittstelle beinhaltet.

3. Vorrichtung gemäß Anspruch 1, wobei der Betätigungsmechanismus einen Schieber beinhaltet.

4. Vorrichtung gemäß Anspruch 1, wobei der Betätigungsmechanismus einen Ausleger beinhaltet.

5. Vorrichtung gemäß Anspruch 1, wobei der Betätigungsmechanismus eine vorgespannte Verriegelung beinhaltet.

6. Vorrichtung gemäß Anspruch 1, die ferner einen Verriegelungseinsatz an der Verlängerungshalterung beinhaltet.

7. Vorrichtung gemäß Anspruch 1, die ferner einen Knopf zum Betätigen des Betätigungsmechanismus beinhaltet.

8. Vorrichtung gemäß Anspruch 1, wobei der Betätigungsmechanismus eines oder beide von einem elastischen Material oder einem flexiblen Material beinhaltet.

9. Vorrichtung gemäß Anspruch 1, die ferner eine Ausrichtungsbefestigung an der Gesichtsschnittstellenhalterung beinhaltet.

10. Vorrichtung gemäß Anspruch 1, die ferner ein Verriegelungsgehäuse an der Gesichtsschnittstellenhalterung beinhaltet.

11. Vorrichtung gemäß Anspruch 1, die ferner eine vorgespannte Federverriegelung an der Verlängerungshalterung beinhaltet.

12. Vorrichtung gemäß Anspruch 1, die ferner eine Vielzahl von Nuten an der Gesichtsschnittstellenhalterung beinhaltet.

13. Vorrichtung gemäß Anspruch 1, die ferner eine Vielzahl von Nuten an der Verlängerungshalterung beinhaltet.

14. Ein Verfahren zum Herstellen einer Vorrichtung, wobei das Verfahren Folgendes beinhaltet:
Bereitstellen einer Gesichtsschnittstellenhalterung (804), die konfiguriert ist, um einen Benutzer in Eingriff zu nehmen;
Koppeln einer Verlängerungshalterung (802) mit einer Kopfanzeigevorrichtung (102) und der Gesichtsschnittstellenhalterung (804);
Koppeln eines Betätigungsmechanismus (806) mit mindestens einer von der Gesichtsschnittstellenhalterung (804) und der Verlängerungshalterung (802), wobei der Betätigungsmechanismus (806) einen räumlichen Abstand zwischen einer Oberfläche der Gesichtsschnittstellenhalterung (804) und einer Oberfläche der Verlängerungshalterung (802) definiert;
Einstellen des Betätigungsmechanismus (806), um den gewünschten Abstand zwischen der Gesichtsschnittstellenhalterung (804) und der Verlängerungshalterung (802) einzustellen; und
Sichern des Betätigungsmechanismus (806), um den eingestellten Abstand zwischen der Gesichtsschnittstellenhalterung (804) und der Verlängerungshalterung (802) aufrechtzuerhalten;
**dadurch gekennzeichnet, dass** das Verfahren ferner Folgendes beinhaltet:
Bereitstellen numerischer Indikatoren auf einer Außenfläche der Gesichtsschnittstellenhalterung (804);
und
Bereitstellen einer Öffnung (816) auf der Verlängerungshalterung (802) zum Anzeigen der numerischen Indikatoren.

15. Verfahren gemäß Anspruch 14, wobei der Betätigungsmechanismus eine Stecker-und-Nut-Schnittstelle beinhaltet.

## Revendications

1. Un dispositif comprenant :
une monture d'interface faciale (804) configurée pour venir en contact avec un utilisateur ;
une monture d'extension (802) couplée à un dispositif d'affichage porté sur la tête (102) et à la monture d'interface faciale (804) ; et
un mécanisme d'actionnement (806) couplé à au moins une monture parmi la monture d'interface faciale (804) et la monture d'extension (802), dans lequel le mécanisme d'actionnement (806) définit une distance spatiale entre une surface de la monture d'interface faciale (804) et une surface de la monture d'extension (802) ;
**caractérisé en ce que** :
la monture d'interface faciale (804) comprend des indicateurs numériques sur une surface extérieure de celle-ci ; et
la monture d'extension (802) comprend un orifice (816) destiné à l'affichage des indicateurs numériques.

2. Le dispositif de la revendication 1, dans lequel le mécanisme d'actionnement comprend une interface à plot et rainure.

3. Le dispositif de la revendication 1, dans lequel le mécanisme d'actionnement comprend un coulisseau.

4. Le dispositif de la revendication 1, dans lequel le mécanisme d'actionnement comprend un élément en porte-à-faux.

5. Le dispositif de la revendication 1, dans lequel le mécanisme d'actionnement comprend un loquet sollicité.

6. Le dispositif de la revendication 1, comprenant en outre un insert de verrouillage sur la monture d'extension.

7. Le dispositif de la revendication 1, comprenant en outre un bouton destiné à l'actionnement du mécanisme d'actionnement.

8. Le dispositif de la revendication 1, dans lequel le mécanisme d'actionnement comprend soit un matériau élastique, soit un matériau flexible, soit les deux.

9. Le dispositif de la revendication 1, comprenant en outre une pièce d'alignement sur la monture d'interface faciale.

10. Le dispositif de la revendication 1, comprenant en outre un logement de loquet sur la monture d'interface faciale.

11. Le dispositif de la revendication 1, comprenant en outre un loquet sollicité par ressort sur la monture d'extension.

12. Le dispositif de la revendication 1, comprenant en outre une pluralité de rainures sur la monture d'interface faciale.

13. Le dispositif de la revendication 1, comprenant en outre une pluralité de rainures sur la monture d'extension.

14. Un procédé pour la fabrication d'un dispositif, le procédé comprenant :
la fourniture d'une monture d'interface faciale (804) configurée pour venir en contact avec un utilisateur ;
le couplage d'une monture d'extension (802) à un dispositif d'affichage porté sur la tête (102) et à la monture d'interface faciale (804) ;
le couplage d'un mécanisme d'actionnement (806) à au moins une monture parmi la monture d'interface faciale (804) et la monture d'extension (802), dans lequel le mécanisme d'actionnement (806) définit une distance spatiale entre une surface de la monture d'interface faciale (804) et une surface de la monture d'extension (802) ;
l'ajustement du mécanisme d'actionnement (806) afin de régler la distance souhaitée entre la monture d'interface faciale (804) et la monture d'extension (802) ; et
le blocage du mécanisme d'actionnement (806) afin de maintenir la distance réglée entre la monture d'interface faciale (804) et la monture d'extension (802) ;
**caractérisé en ce que** le procédé comprend en outre :
la fourniture d'indicateurs numériques sur une surface extérieure de la monture d'interface faciale (804) ; et
l'aménagement d'un orifice (816) sur la monture d'extension (802) destiné à l'affichage des indicateurs numériques.

15. Le procédé de la revendication 14, dans lequel le mécanisme d'actionnement comprend une interface à plot et rainure.
